# EUROPÄISCHE PATENTSCHRIFT

(11) **EP 2 433 761 B1**
(45) Veröffentlichungstag und Bekanntmachung des Hinweises auf die Patenterteilung: **12.12.2012**
(21) Anmeldenummer: 11182308.4
(22) Anmeldetag: 22.09.2011
(51) Int. Cl.: B25J 19/00, B25J 21/00

(54) **Vorrichtung umfassend eine Klimakammer mit einem Roboter**
Device comprising an air-conditioned chamber containing a robot
Dispositif doté d'une chambre climatisée contenant un robot

(30) Priorität: 23.09.2010 DE 202010008616 U
(43) Veröffentlichungstag der Anmeldung: 28.03.2012
(73) Patentinhaber: Weiss Umwelttechnik GmbH, 35447 Reiskirchen (DE); Battenberg, Günther, 35037 Marburg (DE)
(72) Erfinder: Battenberg, Günther, 35037 Marburg (DE); Klee, Gerald, 35325 Mücke (DE)
(74) Vertreter: Stoffregen, Hans-Herbert

(56) Entgegenhaltungen:
- EP-A1- 1 693 149
- WO-A2-2007/120438
- DE-A1- 10 013 721
- DE-A1- 10 306 559
- JP-A- 9 254 076
- US-A1- 2006 108 342

## Beschreibung

Die Erfindung bezieht sich auf eine Vorrichtung umfassend eine Klimakammer mit einem von einem Isolierboden begrenzten Innenraum, dessen Temperatur mittels eines ersten Aggregats einstellbar ist, und einer in dem Innenraum angeordneten Handhabungseinrichtung, die mittels eines zweiten Aggregates temperierbar ist.

Eine entsprechende Vorrichtung ist der DE-A-100 13 721 zu entnehmen. Zum Temperieren eines Roboters als Handhabungseinrichtung wird dieser von einer Doppelhülle umgeben, in deren Zwischenraum temperierte Luft führbar ist. Eine Heiz- und Kühlvorrichtung zum Einstellen der gewünschten Temperatur wird getrennt von der Klimakammer positioniert und weist ein verfahrbares Gehäuse auf. Dieses ist über Leitungen mit dem Roboter bzw. dessen Umhüllung verbunden und durchsetzt hierzu entsprechende Seitenwandungen der Klimakammer.

Aus der DE-B-103 06 559 ist eine Roboter-Klimatisierungsvorrichtung bekannt, die eine den Roboter umgebende Umhüllende aufweist. Diese ist über Anschlüsse mit einem verfahrbaren Klimamodul verbunden.

Nachteil der bekannten Vorrichtungen ist es, dass das Aggregat, mit dem die Handhabungseinrichtung temperiert wird, gesondert zu dem Klimaschrank aufgestellt wird, so dass beim Transport erst ein Lösen der Verbindungsschläuche erforderlich ist, um sodann den Klimaschrank und getrennt das Aggregat für den Roboter zu transportieren. Dies ist insbesondere dann nachteilig, wenn ein Klimaschrank häufig an verschiedenen Orten zum Einsatz gelangen soll.

Die DE-A-35 32 305 bezieht sich auf eine Fertigungs- bzw. Montagezelle für Werkstücke und weist einen Industrie-Roboterarbeitsplatz auf. Um einen Transport zu ermöglichen, ist die Montagezelle als Transportcontainer ausgebildet.

Gegenstand der DE-A-195 44 240 sind ein Verfahren und eine Vorrichtung zur Ermittlung der räumlichen Koordinaten von Objektpunkten und Verfahren zur Herstellung einer Karosserie. Die Vorrichtung, die insbesondere zur Überprüfung der Maßhaltigkeit großer Gegenstände wie Kraftfahrzeugkarosserien dient, kann eine klimatisierbare Kammer sowie einen Messroboter umfassen.

Eine Roboterzelle ist aus der DE-A-10 2008 055 677 bekannt. Diese umfasst ein Grundgerüst, in dem ein Roboter angeordnet ist. An das Grundgerüst sind unterschiedliche Einschübe ankoppelbar.

Ein Klimaschrank mit integrierter Handhabungs-Einrichtung ist aus der CH-A-690 962 bekannt.

Die JP-A-9 254076 bezieht sich auf einen Roboter, der von einer Umhüllung umgeben ist, um eine Temperatur zu ermöglichen.

Gegenstand der EP-A-1 693 149 ist eine Bearbeitungsvorrichtung, die ein Gestell mit einem in einem Freiraum einsetzbaren Wechselmodul umfasst, das eine Werkstückaufnahme sowie ein Bearbeitungswerkzeug aufweist.

Eine als transportierbare Kabine ausgebildete Schweißzelle mit Roboter ist aus der US-A-2006/108342 bekannt.

Die WO-A-2007/120438 bezieht sich auf eine modular aufgebaute Arbeitszelle mit Roboter.

Der vorliegenden Erfindung liegt die Aufgabe zu Grunde, eine Vorrichtung der eingangs genannten Art so weiterzubilden, dass eine Vereinfachung des Transports erfolgt.

Auch soll nach einem Aspekt die Möglichkeit gegeben sein, dass die Handhabungseinrichtung ohne großen Aufwand auch außerhalb des Klimaschranks gewartet bzw. überprüft werden kann.

Nach einem weiteren Aspekt der Erfindung soll sichergestellt sein, dass Schwingungen vom Klimaschrank auf den Roboter nicht oder im Wesentlichen nicht übertragen werden können.

Zur Lösung zumindest eines der Aspekte sieht die Erfindung im Wesentlichen vor, dass die Vorrichtung einen sowohl die Klimakammer als auch das erste und das zweite Aggregat aufnehmenden Rahmen umfasst, zu dem ein die Handhabungseinrichtung aufnehmendes Gestell verstellbar ist, das bei Nutzung des Klimaschranks zu dem Rahmen entkoppelt und beim Transport der Vorrichtung mit dem Rahmen zur Bildung einer Einheit verbunden ist.

Erstes und zweites Aggregat schließt auch die Möglichkeit ein, dass diese durch ein einziges Aggregat ersetzt werden, so dass infolgedessen nur ein Kompressor mit zwei Kühlstellen benötigt wird, wobei eine Kühlstelle für den Roboter und die andere Kühlstelle für den Innenraum der Klimakammer bestimmt sind. Insoweit ist nachstehend das Merkmal erstes und zweites Aggregat auch als Synonym für ein einziges Aggregat zu verstehen.

Abweichend von vorbekannten Vorrichtungen bilden Klimaschrank und das diesen klimatisierende Aggregat sowie das die Handhabungseinrichtung wie Roboter klimatisierende Aggregat eine Einheit, so dass ein problemloser Transport möglich ist, ohne dass ein Lösen von Verbindungen erforderlich ist. Dadurch, dass die Handhabungseinrichtung zu dem Rahmen entkoppelbar ist, ergibt sich der Vorteil, dass während Messungen Schwingungen von dem Rahmen auf die Handhabungseinrichtung nicht oder nicht wesentlich übertragen werden können.

Das Gestell selbst ist zu dem Rahmen verstellbar, so dass somit die Möglichkeit besteht, dass das Gestell mit der Handhabungseinrichtung aus dem Klimaschrank, also dessen Innenraum durch Verfahren des Gestells entfernbar ist, so dass z. B. eine problemlose Wartung erfolgen kann, ohne dass in dem Innenraum des Klimaschranks selbst ein Hantieren notwendig ist.

Das zur Bildung einer Einheit erfolgende Verbinden von Gestell und Rahmen stellt sicher, dass ein Transport problemlos durchführbar ist, ohne dass Schläuche oder sonstige Verbindungen zu lösen sind, die für das Klimatisieren der Handhabungseinrichtung benötigt werden.

In Weiterbildung der Erfindung ist vorgesehen, dass die Handhabungseinrichtung einen Drehsockel umfasst, der von einer Aufnahme aufgenommen ist, die den Isolierboden durchsetzt oder mit ihrem oberen Rand fluchtend zum Isolierboden verläuft. Hierdurch ist - und gleichfalls in Abweichung vom vorbekannten Stand der Technik - die Möglichkeit gegeben, dass nur eine geringe Masse der Aufnahme sich innerhalb des Innenraums des Klimaschranks befindet, so dass Temperaturverfälschungen vermieden bzw. Temperaturregelungen vereinfacht werden.

Insbesondere ist vorgesehen, dass der Isolierboden einen in Verstellrichtung der Aufnahme verlaufenden entfernbaren Abschnitt einer Breite aufweist, die mindestens gleich Breite der Aufnahme quer zur Verstellrichtung ist. Dabei ist der entfernbare Abschnitt insbesondere über Führungen mit verbleibenden Bereichen bzw. Abschnitten des Isolierbodens verbunden. Hierzu können sich die Ränder der Abschnitte überlappen und in etwa eine Z-Geometrie aufweisen.

Die Aufnahme ist gegenüber dem Isolierboden abgedichtet. Hierzu ist insbesondere vorgesehen, dass bei Positionierung der Aufnahme in dem Innenraum des Klimaschranks die Aufnahme mit Spalt von dem Isolierboden umgeben wird. Der Spalt wird sodann von einer vorzugsweise mehrteiligen Dichtung ausgefüllt.

Selbstverständlich ist auch die Möglichkeit gegeben, dass ein abdichtendes Anliegen des Isolierbodens an der Umfangsfläche der Aufnahme erfolgt. Hierzu können zusätzliche Dichtungen vorgesehen sein.

Unabhängig hiervon wird vorgeschlagen, dass die Aufnahme gegenüber dem Isolierboden derart abgedichtet ist, dass von ersterem Schwingungen auf die Aufnahme und damit dem Roboter, also die Handhabungseinrichtung nicht oder weitgehend nicht übertragen werden.

Die erfindungsgemäßen konstruktiven Merkmale ermöglichen ein einfaches Herausziehen der Handhabungseinrichtung aus dem Innenraum des Klimaschranks durch Verstellen des Gestells zu dem Rahmen, ohne dass Einbußen bezüglich der Isolierung hingenommen werden müssen. So ist es nur erforderlich, dass vor Entfernen der Handhabungseinrichtung der Abschnitt vom Boden gelöst wird, wodurch ein Freiraum einer Breite zur Verfügung steht, der sicherstellt, dass die Aufnahme problemlos mit der Handhabungseinrichtung aus dem Innenraum des Klimaschranks entfernbar ist. Durch die Führung ist sichergestellt, dass eine hinreichende Abdichtung zwischen den einzelnen Abschnitten des Isolierbodens erfolgt, so dass die erforderliche Isolierung sichergestellt ist.

Um eine hinreichende Stabilität zur Vermeidung von Schwingungen für die Handhabungseinrichtung zu gewährleisten, sieht die Erfindung des Weiteren vor, dass von dem Gestell für die Handhabungseinrichtung zumindest eine Zusatzmasse, vorzugsweise zwei Zusatzmassen ausgehen, die sich entlang der Seite bzw. Seiten erstrecken, die in Verstellrichtung des Gestells verlaufen. Die Zusatzmassen weisen insbesondere eine quaderförmige Geometrie auf und können auch als Fundamente bezeichnet werden.

Das die Klimatisierung der Handhabungseinrichtung ermöglichende zweite Aggregat oder das sowohl für den Innenraum der Klimakammer als auch die Handhabungseinrichtung zum Temperieren dieser bestimmte Aggregat sollte über eine Zu- und eine Abluftleitung mit von der Aufnahme oder einem Fortsatz von dieser ausgehenden Anschlüssen verbunden sein, die ihrerseits mit dem Zwischenraum zwischen der Handhabungseinrichtung und einer diese umgebenden Umhüllung oder mit dem Zwischenraum von die Handhabungseinrichtung umgebenden Umhüllungen verbunden sind. Dabei sind die Zu- und Abluftleitung mit den Anschlüssen über Steckverbindungen verbunden, die gegeneinander abgedichtet sind. Vorzugsweise sind die Abdichtungen derart ausgebildet, dass eine Relativbewegung erfolgen kann, so dass gleichfalls vermieden wird, dass Schwingungen auf die Aufnahme und damit die Handhabungseinrichtung übertragen werden.

Das Gestell weist insbesondere eine Quadergeometrie mit einem palettenförmig ausgebildeten Bodenrahmen mit Füßen auf, so dass die Vorrichtung z. B. durch Untergreifen des Bodenrahmens mit den Zinken eines Gabelstaplers erfasst und sodann transportiert werden kann.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: eine Vorrichtung mit Klimakammer und Roboter,
- Fig. 2: die Vorrichtung gemäß Fig. 1 mit teilweise entferntem Isolierboden,
- Fig. 3: die Vorrichtung gemäß Fig. 1 und Fig. 2 mit aus der Klimakammer entferntem Roboter und
- Fig. 4: ein den Roboter aufnehmendes Gestell.

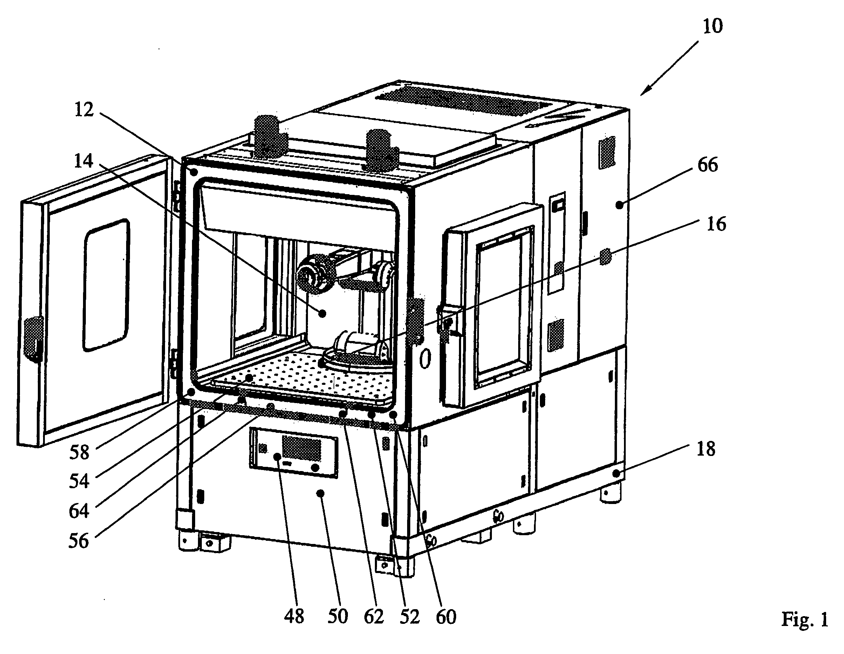

Der Fig. 1 ist eine Vorrichtung 10 zu entnehmen, mit der Mess-, Prüf- und Bewegungsfunktionen von Gegenständen wie Baugruppen bzw. Bedienelementen von Gegenständen und Baugruppen in Abhängigkeit von unterschiedlichen Temperaturen und Luftfeuchtigkeit durchgeführt werden. Hierzu umfasst die Vorrichtung 10 einen Klimaschrank 12 mit Innenraum 14, der über ein erstes Aggregat temperierbar und ggfs. in Bezug auf seine Luftfeuchtigkeit einstellbar ist. Der Temperaturbereich, der üblicherweise abgedeckt wird, liegt zwischen -50 °C und + 120 °C.

Um an in dem Innenraum 14 vorhandenen Gegenständen bzw. Baugruppen Mess-, Prüf-und Bewegungsfunktionen durchführen bzw. Gegenstände oder Teile dieser manipulieren zu können, ist ein Roboter 16 als Handhabungseinrichtung innerhalb des Innenraums 14 angeordnet. Damit dieser ordnungsgemäß arbeiten kann, muss der Roboter 16 einer Arbeitstemperatur ausgesetzt sein, die üblicherweise zwischen +10 °C und +30 °C liegt. Um dies sicherzustellen, wird der Roboter 16 von einer nicht dargestellten Umhüllenden umgeben, so dass zwischen dieser und dem Roboter 16 eine gewünschte Temperatur eingestellt werden kann. Es besteht jedoch auch die Möglichkeit, den Roboter 16 mit einer Doppelhülle zu umgeben, die von einer entsprechend temperierten Luft durchströmt wird. Insoweit wird auf hinlängliche Techniken wie beispielhaft auf DE-A-100 13 721 verwiesen.

Der Klimaschrank 12 geht von einem Rahmen 18 aus, der im Ausführungsbeispiel verkleidet ist. Dabei weist der Rahmen 18 eine Dimensionierung derart auf, dass der Klimaschrank 12 so angeordnet ist, dass der Innenraum 14 von einer stehenden Person bequem zugänglich ist. Des Weiteren befinden sich hinter dem Klimaschrank 12 ein erstes und ein zweites Aggregat, die rückseitig am Rahmen 18 in Maschinenkammern aufgenommen sind. Die Aggregate werden zur Temperierung des Innenraums 14 bzw. des Roboters 16 benötigt.

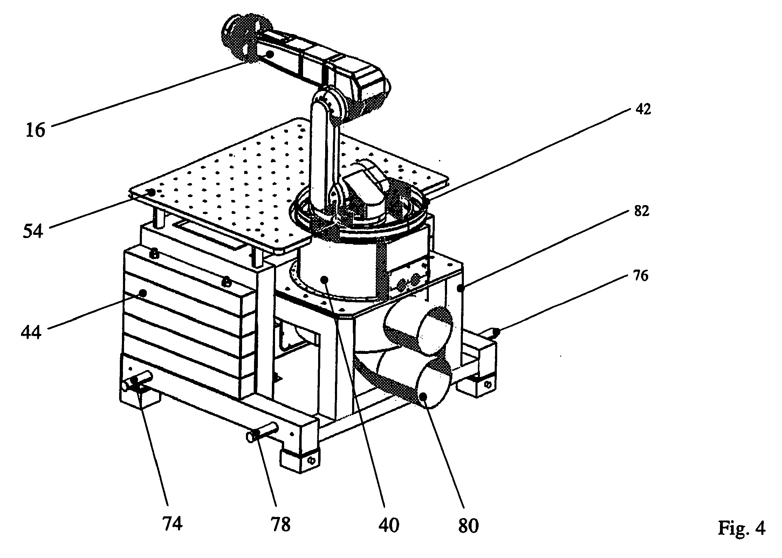

Wie sich aus der zeichnerischen Darstellung ergibt, geht der Roboter 16 von einem als Gestell 20 bezeichneten Rahmen aus, der zu dem die Klimakammer 12 und die Aggregate aufnehmenden Rahmen 18 verstellbar ist. Zur eindeutigen Positionierung weist das Gestell 20 Seitenschenkel 22, 24 auf, die bei in dem Rahmen 18 angeordneten Gestell 20 sich entlang von Seitenschenkeln 26, 28 des Rahmens 18, und zwar beabstandet zu diesen erstrecken. Des Weiteren weisen sowohl die Schenkel 22, 24 als auch die Schenkel 26, 28 Löcher oder Durchbrechungen auf, von denen die in den einander zugeordneten Schenkeln 22, 26 vorhandenen Löcher oder Durchbrechungen mit den Bezugszeichen 30, 34, 32, 36 bezeichnet sind. Bei ordnungsgemäßer Positionierung des Gestells 20 in dem Rahmen 18 fluchten sodann die Löcher 30, 32 und 34, 36, die zum Herstellen einer Einheit aus Gestell 20 und Rahmen 18 von Bolzen 74, 76, 78 (Fig. 4) durchsetzt werden können.

Das Gestell 20 weist einen Tisch 38 auf, von dem eine topfförmige Aufnahme 40 ausgeht, die einen Drehsockel 42 des Roboters 16 aufnimmt. Des Weiteren erstrecken sich entlang der Seiten des Gestells 20 quaderförmige Zusatzmassen 44, 46, um das erforderliche Gewicht zu erreichen, das sicherstellt, dass bei Betrieb des Roboters 16 dieser nicht in Schwingung gerät. Weiterhin geht von dem Gestell 20 ein Steuerungsteil 48 aus. Die Vorderseite des Gestells 20 ist von einer Verkleidung 50 abgedeckt, die eine Öffnung für die Front der Steuerung 48 aufweist.

Der Innenraum 14 des Klimaschranks 12 ist von einem Isolierboden 52 verschlossen, auf dem entsprechend der Fig. 1 eine Mess- oder Aufspannplatte 54 anordbar ist. Der Isolierboden 52 weist einen mittleren Abschnitt 56 und ortsfeste Randabschnitte 58, 60 auf. Der mittlere Abschnitt 56 weist eine minimale lichte Breite auf, die zumindest gleich der Breite der als Topf ausgebildeten Aufnahme 40 ist. Ferner ist der mittlere Abschnitt 56 gegenüber den Seitenabschnitten 58, 60 über Führungen 62, 64 mit den Seiten- oder äußeren Abschnitten 58, 60 verbunden, die eine Art Labyrinth-Dichtung bilden, so dass die erforderliche Isolierung des Innenraums 14 gegenüber dem Äußeren auch im Bodenbereich gewährleistet ist.

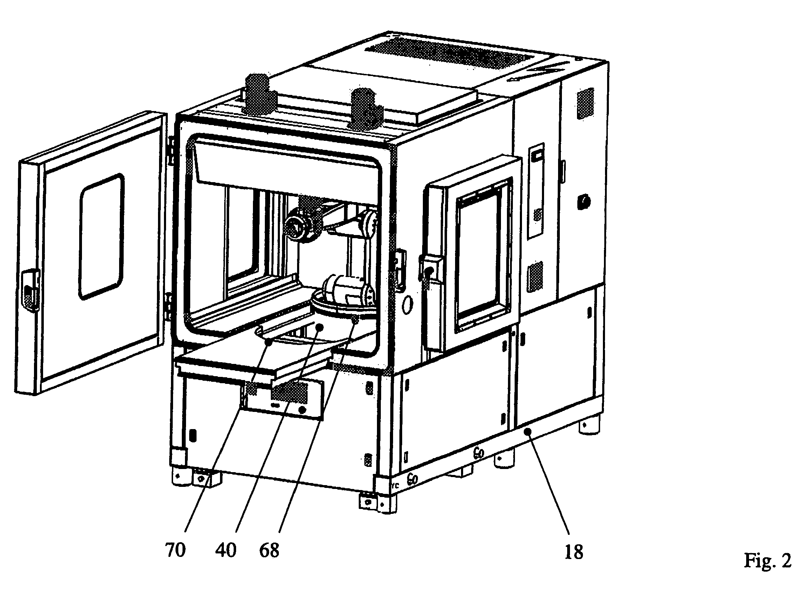

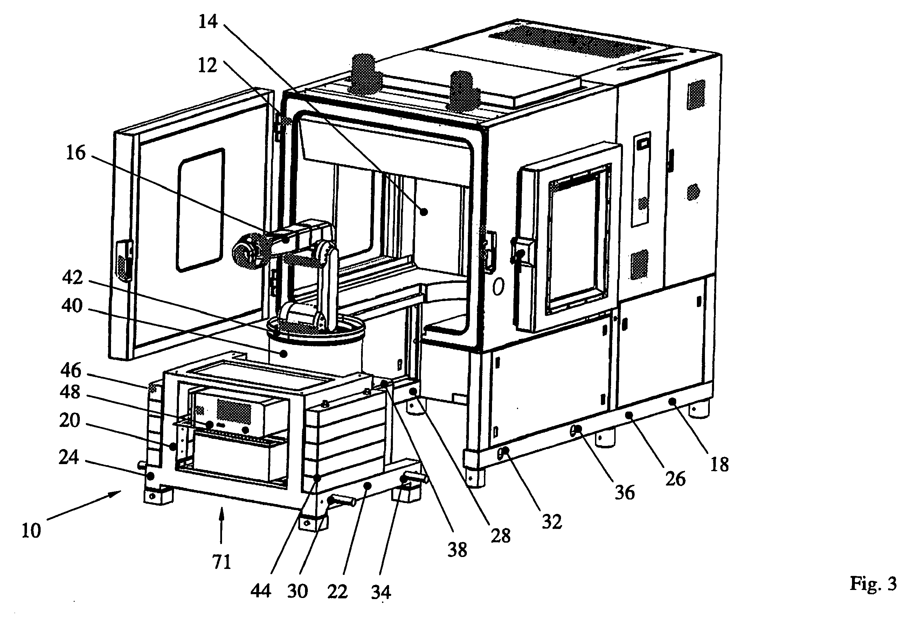

Um den Roboter 16 z. B. zu Wartungsarbeiten aus dem Innenraum 14 herausnehmen zu können, wird nach Entfernen der Mess- oder Aufspannplatte 54 der mittlere Abschnitt 56 des Isolierbodens 52 herausgezogen (Fig. 2), um sodann das Gestell 20 mit dem Roboter 16 herausziehen zu können. Die Verstellrichtung des Gestells 20 verläuft dabei senkrecht zur Öffnung 66 des Klimaschranks 12 bzw. des Innenraums 14. Dies ergibt sich auch aus einem Vergleich der Fig. 1, 2 und 3.

Die topfförmige Aufnahme 40 ist unter Einhaltung eines gleichmäßigen Spalts zu dem Isolierboden 52 bzw. den Abschnitten 56, 58 positioniert. Bei Betrieb ist der Spalt von einer vorzugsweise zweiteiligen einen Ring bildenden Dichtung verschlossen.

Die die Aufnahme 40 umgebenden Abschnitte des Isolierbodens 52 weisen entsprechend der Umfangsgeometrie der Aufnahme 40 entsprechende Ausschnitte auf, so dass sich der gleichmäßige Spalt ergibt. Der Ausschnitt in dem mittleren Abschnitt 56, der aufgrund der Zylindergeometrie der Aufnahme 40 eine Kreisabschnittsgeometrie aufweist, ist mit dem Bezugszeichen 70 gekennzeichnet.

Selbstverständlich besteht auch die Möglichkeit, dass der Isolierboden 52 bzw. die die Aufnahme 40 umgebenden Abschnitte 56, 58 unmittelbar gegenüber der Aufnahme 40 abgedichtet sind.

Unabhängig von der Konstruktion der Abdichtung zwischen Isolierboden 52 und der Aufnahme 40 ist jedoch sicherzustellen, dass von dem Isolierboden 52 auf die Aufnahme 40 im Wesentlichen keine Schwingungen übertragen werden.

Mit anderen Worten ist die Dichtung zwischen dem Isolierboden 52 und der Aufnahme 40 derart ausgebildet, dass in gewissem Umfang eine Relativbewegung zwischen der Aufnahme 40 und dem Isolierboden 52 möglich ist, ohne dass Schwingungen der Klimakammer 12 oder des Gestells 18 auf die Aufnahme 40 und damit den Roboter 16 übertragen werden.

Eine Schwingungsübertragung erfolgt auch nicht zwischen dem Rahmen 18 und dem Gestell 20, da bei Benutzung des Klimaschranks 12 eine Entkopplung zwischen dem Rahmen 18 und dem Gestell 20 erfolgt. Erst dann, wenn ein Transport erfolgen soll, wird das Gestell 20 mit dem Rahmen 18 über die die Löcher 30, 32, 34, 36 durchsetzenden Bolzen 74, 76, 78 verbunden, damit sodann zum Transport z. B. die Zinken eines Gabelstaplers den Bodenrahmen 71 des Gestells untergreifen können.

Um den Roboter 16 zu klimatisieren, gehen von der Aufnahme 40 bzw. einem Fortsatz rohrförmige Anschlüsse 80, 82 aus, die über Steckverbindungen mit nicht dargestellten Leitungen verbindbar sind, die von dem von dem Rahmen 18 aufgenommenen Aggregat ausgehen, über das die Temperierung der den Roboter 18 umgebenden Luft erfolgt. Dabei sind die Steckverbindungen derart ausgebildet, dass gleichfalls eine Schwingungsübertragung von dem Gestell 18 unterbunden wird.

## Patentansprüche

1. Vorrichtung (10) umfassend einen Klimaschrank (12) mit einem von einem Isolierboden (52) begrenzten Innenraum (14), dessen Temperatur mittels eines ersten Aggregats einstellbar ist, und eine in dem Innenraum angeordnete Handhabungseinrichtung (16), die mittels eines zweiten Aggregats temperierbar ist,
**dadurch gekennzeichnet,**
**dass** die Vorrichtung (10) einen sowohl den Klimatisierungsschrank (12) als auch das erste und das zweite Aggregat aufnehmenden Transportrahmen (18) umfasst, zu dem ein die Handhabungseinrichtung (16) aufnehmendes Gestell (20) verstellbar ist, das bei Benutzung des Klimaschranks zu dem Rahmen entkoppelt und bei einem Transport der Vorrichtung mit dem Rahmen zur Bildung einer Einheit verbunden ist.

2. Vorrichtung nach Anspruch 1, wobei die Handhabungseinrichtung (16) einen Drehsockel (42) aufweist, der von einer Aufnahme (40) ausgeht,
**dadurch gekennzeichnet,**
**dass** der Isolierboden (52) eine der Umfangsgeometrie der Aufnahme (40) entsprechende Aussparung aufweist, wobei die Aufnahme mit ihrem oberen Rand bündig zum Isolierboden oder innenraumseitig oberhalb des Isolierbodens verläuft.

3. Vorrichtung nach Anspruch 2,
**dadurch gekennzeichnet,**
**dass** der Isolierboden (52) einen in Verstellrichtung der Aufnahme (40) verlaufenden entfernbaren Abschnitt (56) einer Breite aufweist, die zumindest gleich der Breite der Aufnahme (40) quer zur Verstellrichtung ist.

4. Vorrichtung nach Anspruch 3,
**dadurch gekennzeichnet,**
**dass** der entfernbare Abschnitt (56) des Isolierbodens (52) über Führungen (62, 64) mit verbleibenden Abschnitten (58, 60) des Isolierbodens (52) verbunden ist.

5. Vorrichtung nach zumindest einem der vorhergehenden Ansprüche,
**dadurch gekennzeichnet,**
**dass** von dem Gestell (20) zumindest eine Zusatzmasse (44, 46) ausgeht.

6. Vorrichtung nach zumindest einem der vorhergehenden Ansprüche,
**dadurch gekennzeichnet,**
**dass** das erste und das zweite Aggregat als ein Aggregat ausgebildet sind.

7. Vorrichtung nach Anspruch 2,
**dadurch gekennzeichnet,**
**dass** das zweite Aggregat oder das das erste und das zweite Aggregat bildende Aggregat über eine Zu- und eine Abluftleitung mit von der Aufnahme ausgehenden Anschlüssen (80, 82) verbunden ist, die ihrerseits mit Zwischenraum zwischen der Handhabungseinrichtung (16) und einer diese umgebenden Umhüllung oder mit Zwischenraum von die Handhabungseinrichtung umgebenden Umhüllungen verbunden sind.

8. Vorrichtung nach Anspruch 7,
dadurch gekennzeicnet,
dass die Zu- und Abluftleitungen über Steckverbindungen mit den Anschlüssen (80, 82) verbunden sind.

9. Vorrichtung nach Anspruch 2,
**dadurch gekennzeichnet,**
**dass** bei ordnungsgemäß in dem Innenraum (14) angeordneter Handhabungseinrichtung (16) zwischen deren Aufnahme (40) und dem Isolierboden (52) ein Spalt verläuft, der durch eine vorzugsweise mehrteilige Dichtung verschlossen ist.

10. Vorrichtung nach zumindest einem der vorhergehenden Ansprüche,
**dadurch gekennzeichnet,**
**dass** das Gestell (20) einen Bodenrahmen (71) mit Füßen aufweist.

## Claims

1. Device (10) comprising a climatic cabinet (12) having an inner chamber (14) limited by an insulating floor (52) whose temperature can be adjusted by means of a first unit, and having a handling device (16) arranged inside the inner chamber whose temperature can be controlled by means of a second unit,
wherein
the device (10) comprises a transport frame (18) accommodating both the climatic cabinet (12) and the first and second units and up to which can be moved a stand (20) which accommodates the handling device (16) and which is uncoupled from the frame during use of the climatic cabinet and is connected to the frame to form one unit when the device is transported.

2. Device according to Claim 1, where the handling device (16) comprises a rotary base (42) extending from a receptacle (40),
wherein
the insulating floor (52) has a recess corresponding to the outline geometry of the receptacle (40), where the upper edge of the receptacle is flush with the insulating floor or is above the insulating floor on the inner chamber side.

3. Device according to Claim 2,
wherein
the insulating floor (52) comprises a removable segment (56) running in the direction of movement of the receptacle (40) and having a width that is at least equal to the width of the receptacle (40) transversely to the direction of movement.

4. Device according to Claim 3,
wherein
the removable segment (56) of the insulating floor (52) is connected by guides (62, 64) to remaining sections (58, 60) of the insulating floor (52).

5. Device according to at least one of the foregoing claims,
wherein
at least one additional weight (44, 46) extends from the stand (20).

6. Device according to at least one of the foregoing claims,
wherein
the first and second units are designed as a single unit.

7. Device according to Claim 2,
wherein
the second unit or the unit that constitutes the first and second units is connected by an supply air line and a discharge air line to connections (80, 82) which extend from the receptacle and which are themselves connected to intermediate space between the handling device (16) and an envelope surrounding it, or to an intermediate space of envelopes surrounding the handling device.

8. Device according to Claim 7,
wherein
the supply air and discharge air lines are connected to the connections (80, 82) by push-in joints.

9. Device according to Claim 2,
wherein
when the handling device (16) is properly arranged inside the inner chamber (14) there is a gap between its receptacle (40) and the insulating floor (52), said gap being closed by a seal preferably having multiple parts.

10. Device according to at least one of the preceding claims,
wherein
the stand (20) has a bottom frame (71) with feet.

## Revendications

1. Dispositif (10) doté d'une armoire climatique (12) comprenant un espace intérieur (14) délimité par un fond isolant (52), espace dont la température est réglable à l'aide d'une première unité, et comprenant un dispositif de manutention (16) disposé dans l'espace intérieur, lequel peut être tempéré à l'aide d'une seconde unité,
**caractérisé en ce**
**que** le dispositif (10) comprend un cadre de transport (18) supportant aussi bien l'armoire de climatisation (12) que la première et la seconde unités, par rapport auquel un support (20) réceptionnant le dispositif de manutention (16) est déplaçable, lequel support est désolidarisé du cadre lors de l'utilisation de l'armoire climatique et, en cas de transport du dispositif, relié au cadre en formant une unité.

2. Dispositif selon la revendication 1, sachant que le dispositif de manutention (16) présente un socle rotatif (42) lequel sort d'un logement (40),
**caractérisé en ce**
**que** le fond isolant (52) présente un évidement correspondant à la géométrie périphérique du logement (40), sachant que le bord supérieur du logement s'étend en affleurement du fond isolant ou, du côté de l'espace intérieur du dit logement,au-dessus du fond isolant.

3. Dispositif selon la revendication 2,
**caractérisé en ce**
**que** le fond isolant (52) présente une section amovible (56) s'étendant dans le sens de déplacement du logement (40), ladite section ayant une largeur au moins équivalente à la largeur du logement (40) et étant transversale par rapport au sens de déplacement.

4. Dispositif selon la revendication 3,
**caractérisé en ce**
**que** la section amovible (56) du fond isolant (52) est reliée par l'intermédiaire de guides (62, 64) à des sections fixes (58, 60) du fond isolant (52).

5. Dispositif selon au moins l'une des précédentes revendications,
**caractérisé en ce**
**que** au moins une masse supplémentaire (44, 46) sort du support (20).

6. Dispositif selon au moins l'une des précédentes revendications,
**caractérisé en ce**
**que** la première et la seconde unités sont formées comme une seule unité.

7. Dispositif selon la revendication 2,
**caractérisé en ce**
**que** la seconde unité ou l'unité formant la première et la seconde unités est reliée par l'intermédiaire d'une conduite d'amenée et d'évacuation d'air à des conduites de raccordement (80,82) sortant du logement, qui à leur tour sont reliés soit à l'espace intermédiaire entre le dispositif de manutention (16) et un revêtement enveloppant ce dernier, soit à l'espace intermédiaire des revêtements enveloppant le dispositif de manutention

8. Dispositif selon la revendication 7,
**caractérisé en ce**
**que** les conduites d'amenée et d'évacuation d'air sont reliées par le biais de raccords aux conduites de raccordement (80, 82).

9. Dispositif selon la revendication 2,
**caractérisé en ce**
**que**, lorsque le dispositif de manutention (16) est disposé correctement dans l'espace intérieur (14), un écartement s'étend entre son logement (40) et le fond isolant (52), ledit écartement étant fermé par un joint de préférence en plusieurs parties.

10. Dispositif selon au moins l'une des précédentes revendications,
**caractérisé en ce**
**que** le support (20) présente un cadre de sol (71) avec des pieds.
